(19) Europäisches Patentamt
European Patent Office
Office européen des brevets

(11) **EP 3 457 818 B1**

(12) **EUROPEAN PATENT SPECIFICATION**

(45) Date of publication and mention
of the grant of the patent:
**26.08.2020 Bulletin 2020/35**

(51) Int Cl.:
***H05B 47/105*** (2020.01)   ***H05B 47/16*** (2020.01)

(21) Application number: **17190782.7**

(22) Date of filing: **13.09.2017**

(54) **METHOD AND ARRANGEMENT FOR MAKING A BUILDING AUTOMATION SYSTEM REACT TO SENSOR SIGNALS**

VERFAHREN UND ANORDNUNG ZUM VERANLASSEN, DASS EIN GEBÄUDEAUTOMATIONSSYSTEM AUF SENSORSIGNALE REAGIERT

PROCÉDÉ ET DISPOSITIF POUR FAIRE RÉAGIR UN SYSTÈME D'AUTOMATISATION DE BÂTIMENT À DES SIGNAUX DE CAPTEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.03.2019 Bulletin 2019/12**

(73) Proprietor: **Helvar Oy Ab**
**02150 Espoo (FI)**

(72) Inventor: **Juslén, Henri**
**02150 Espoo (FI)**

(74) Representative: **Papula Oy**
**P.O. Box 981**
**00101 Helsinki (FI)**

(56) References cited:
EP-A1- 3 076 764      DE-A1-102016 110 109
US-A1- 2017 122 616      US-B1- 9 332 616

## Description

### FIELD OF THE INVENTION

The invention relates to building automation systems that use sensors to detect and to react to changes in the environment they serve. In particular the invention relates to such a building automation system that is capable of changing the way in which it reacts to certain sensor signals.

### BACKGROUND OF THE INVENTION

Building automation systems use sensors for various purposes. As an example, an automatic lighting system may comprise PIR (passive infrared) sensors that detect movement. A lighting controller in the system may be programmed to switch lights on when movement is detected and to dim the lights down if no movement has been observed for a certain period. The lighting system may also comprise light sensors that measure the amount of light in a served area. The lighting controller may reduce the amount of artificially produced light when sufficient natural daylight is present. Temperature sensors and carbon dioxide sensors are frequently used to control the operation of HVAC (heating, ventilation, and air conditioning) systems. A large number of other sensor types can be used, like microphones, imaging sensors, colour sensors, vibration sensors, wireless signal receivers, electric power usage sensors, and others. A common aim of using sensors is to obtain actual data about the served environment, so that one or more controllers in the system may adapt the operation of the system according to the varying needs of users.

A simple building automation system has only one way of reacting to sensor signals: for example, lights are switched fully on when a PIR sensor detects movement, then dimmed down to 10% if 20 minutes pass without further detection of movement, and finally switched off if the PIR sensor does not detect movement for 10 minutes after the dimming to 10%. Such simple operation is relatively easy to program, but inflexible in the sense that it will typically suit well only a small subset of encountered operating conditions. A slightly more elaborate system may have a working hours mode and an off hours mode, for example so that the working hours mode operates as described above, but after 5:00 PM hours and on weekends the dim-down and switch-off delays are shorter, like 5 minutes and 2 minutes respectively. The idea of such an off hours mode is that since the only person expected to need light during off hours is a security guard making occasional visits to the space, electricity can be saved by switching off the lights quite quickly after the security guard has left.

Experience has shown that the transition between modes may cause inconvenience to users and/or unnecessary wasting of energy. If the systems goes to the off hours mode too early, it often happens that some office workers are still present at that time, and they become annoyed when the lights start going off quicker than usual. If the system operator wants to avoid such inconvenience and sets the transition time very late, some advantages of the automatic switch-off functions are lost because there will be longer periods when the lights are on for no reason. In general it has been found that users of automatic systems are the more satisfied the less they must pay attention to the automatic operation of the system. All noticeable changes in the operation of automatic systems tend to cause questions and general uneasiness.

US2017/0122616 A1 discloses a ventilation fan and light system which applies different rules to the lighting depending on the time of day.

### SUMMARY OF THE INVENTION

It is an objective of the present invention to present an arrangement and a method for changing the way in which a building automation system responds to sensor signals, so that user satisfaction of the system is enhanced. Another objective of the present invention is to enable changing the way in which a building automation system responds to sensor signals so that systems behaving this way are widely applicable to a variety of user needs. Yet another objective of the present invention is to make it easy and convenient to later modify the way in which the building automation system changes its way of responding to sensor signals.

The objectives of the invention are achieved by defining gradual changes between rules that define, what kinds of control signals the system produces on the basis of received sensor signals. Certain objectives of the invention are achieved by providing a graphical user interface through which a user can observe the current rules and the transitions between them, and through which the user can modify the rules while getting visual feedback of the modifications.

According to an aspect of the invention there is provided a controller of a building automation system. The controller is characterised by the features recited in the characterising part of the independent claim directed to a controller.

According to another aspect of the invention there is provided a method for controlling a building automation system. The method is characterised by the features recited in the characterising part of the independent claim directed to a method.

According to yet another aspect of the invention there is provided a computer program comprising one or more sets of machine-readable instructions that, when executed by one or more processors of a building automation system make the system perform a method of the kind described above. The computer program may be embodied on a volatile or a non-volatile computer-readable record medium, for example as a computer program product comprising at least one computer readable non-transitory medium having program code stored thereon, the program code, which when executed by an apparatus, causes the apparatus at least to perform the operations described hereinbefore for the computer program in accordance with the respective aspect of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

## BRIEF DESCRIPTION OF THE DRAWINGS

Figure 1     illustrates parts of a building automation system,
figure 2     illustrates gradually changing from applying a first rule to applying a second rule, and
figure 3     illustrates a user interface of a building automation system.

## DETAILED DESCRIPTION

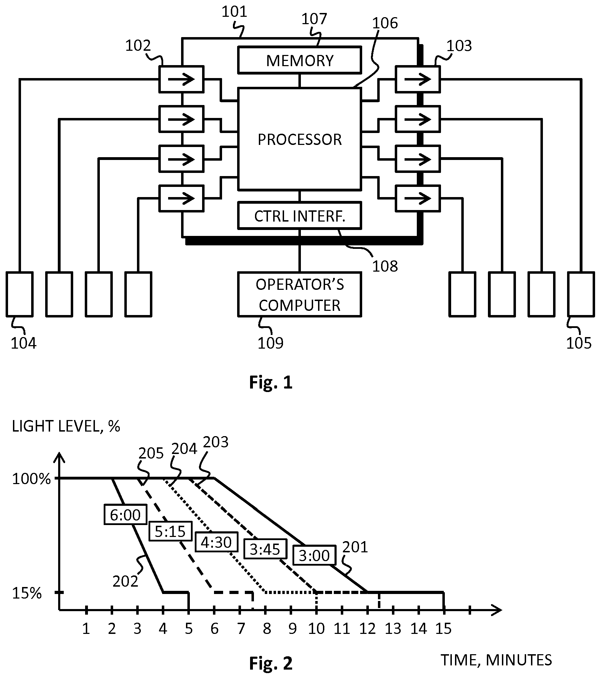

To provide deeper understanding of the ways of reducing the invention into practice, some consideration may be given to the concept of a controller of a building automation system. In general, this concept refers to the intelligent device or devices that during operation decide, how the various functions required of the building automation system are performed, typically in response to various sensor signals that are received from within the building and/or its environment. A simple building automation system may have all intelligence of this kind concentrated into a single device, while a more elaborate building automation system may utilize distributed intelligence so that control functions are performed by a number of devices that can be located all over the building. In this text the term controller refers both to the centralized one-device embodiment and to the multitude of different devices that together perform the corresponding functions. For the ease of understanding it may be advantageous to consider the controller as a logical entity, without taking exact position about its actual physical existence. A controller of a building automation system is shown as 101 in fig. 1.

Such a logically defined controller 101 has one or more signal inputs 102 for receiving sensor signals and one or more control signal outputs 103 for transmitting control signals to devices of the building automation system. An extremely simple building automation system, such as a standalone sensor-equipped luminaire, may consist of one sensor, one control device, and one light source, so that the signal input and control output have clear physical existence as connectors accessible at the outer cover of the control device. If the building automation system is more complicated it may comprise a large number of sensors 104 and a large number of devices to be controlled 105 such as luminaires, emergency lights, actuators of window shades, ventilation fans, heating valves, electric radiators, pumps, and the like. In such systems the sensor signals may take a complicated route from the actual sensing element to the intelligent device that makes decisions: there may be communication lines, wireless links, multiplexers, concentrators, amplifiers, signal processing devices and the like on the way. Similarly the control signals transmitted by the controller may take a complicated route before reaching the actual device, the physical operation of which the control signal should affect. An exact physical appearance of a sensor signal input 102 and a control signal output 103 may be a question of interpretation, but if the controller 101 is considered as a logical entity, it can be clearly shown that it receives, in one way or another, signals that originated at sensors. Similarly within the logical consideration framework it can be clearly shown that control signals created by the controller will, sooner or later, arrive at the devices that are to be controlled and cause the desired operation to be carried out.

The brain of the entity called a controller consists of one or more programmable processors 106. Again conceptually it is easiest to use a single concept, like "processor", to denote and cover all possible ways of implementing the execution of machine-readable instructions that define how the building automation is to operate. Thus the processor 106 as meant here is coupled to receive the sensor signals from the sensor signal inputs 102 and to transmit the control signals to the control signal outputs 103. The term "coupled to receive" emphasizes that there may be intermediate circuits within the controller 101 through which the signals go. The machine-readable instructions are stored in a memory 107 that may be internal and/or external to the processor 106 and that can take various forms, including but not being limited to ROM, RAM, flash memory, magnetic and optical storage media and the like. The memory 107 can also be used to store and read run-time data such as parameter values and incoming and outgoing messages used for communication.

The controller 101 may comprise a control interface 108, through which an operator can affect the way in which the building automation system should work. Fig. 1 shows a coupling from the control interface 108 to an operator's computer 109. This coupling may be a dedicated, local, wired or wireless connection or it may go over even very long distances through communication networks such as wireless or wired local area networks, wide area networks and the internet, or anything between. By using his computer 109 the operator may for example give new parameters to the algorithms that the processor 106 executes, override the control algorithms by manually changing the state of the devices 105, receive and monitor statistical data and announcements of exceptional events that the processor 106 produces, and the like.

The processor 106 is configured to form the control signals for the devices 105 on the basis of the sensor signals that originated from the sensors 104. The operation of the processor 106 proceeds according to a set of rules, as illustrated by an equation

$$y = Ax \tag{1}$$

where $y = [y_1, y_2, y_3, ..., y_M]$ is an output vector representing the control signals, $x = [x_1, x_2, x_3, ..., x_N]$ is an input vector representing the sensor signals, and $A$ is a matrix of dimensions $MxN$, the coefficients $a_{ij}$, $i \in [1,2,3, ...,M]$, $j \in [1,2,3, ...,N]$ of which represent said rules. Dependence on time can be included in the operation of the system in various ways, for example so that the output vector y(t) that represents the control signals at time $t$ is actually calculated as a sum

$$y(t) = A_t x(t) + A_{t-1} x(t-1) + \cdots + A_{t-T} x(t-T) \tag{2}$$

where T is the "history length" or the number of previous sensor signals that are taken into account for determining the control signals at time $t$. The varying subscripts of the matrix $A$ emphasize that the sensor signals from different passed moments of time may have different effects on the end result. Another approach that can be additionally or alternatively used is that the rule(s) applied by the processor 106 use only the most recently received sensor signal(s) as input(s), and the resulting control signals are commands that trigger some action in the controlled devices 105 so that the time-dependent execution of that action remains on the responsibility of the controlled device itself. An example of such a command is a command to dim lights to p % during the next s seconds.

Yet another form of dependency on time is one where the processor 106 is configured to apply a first rule of forming control signals on the basis of sensor signals at a first moment of time and to change to applying a second, different rule of forming control signals on the basis of sensor signals at a second, later moment of time. Thus each of the first and second rules define, what kinds of control signals will be formed on the basis of particular sensor signals, but the resulting control signals will depend on whether the sensor signals were received at said first moment of time or at said second moment of time. In the mathematical form this could be expressed for example as

$$\begin{aligned} y_1 &= A_1 x & t \leq t_c \\ y_2 &= A_2 x & t > t_c \end{aligned} \tag{3}$$

where the top line is equal to saying that if the sensor signals represented by vector $x$ came before or at the critical time instant $t_c$, they are operated upon with the rule matrix $A_1$ to get the control signals represented by vector $y_1$. Similarly the bottom lines says that if the very same sensor signals represented by vector $x$ came after the critical time instant $t_c$, they are operated upon with the different rule matrix $A_2$ to get the different control signals represented by vector $y_2$. The critical time instant $t_c$ thus denotes a sharp border between "first moments of time" and "second moments of time". This form of dependency on time can naturally be combined with any of those described above, for example so that the vectors $y_1$ and $y_2$ represent different set of commands that the controller transmitted as control signals, and each of these commands triggers some action in the controlled devices 105 so that the time-dependent execution of that action remains on the responsibility of the controlled device itself.

The equations (3) can represent for example the kind of operation that was discussed as prior art: a first rule, included in and represented by the first rule matrix $A_1$, implements the working hours mode, while a second rule, included in a represented by the second rule matrix $A_2$, implements the after hours mode.

According to an embodiment of the invention the processor 106 is configured to gradually change, between the first and second moments of time, from applying the first rule to applying the second rule. Thus a valid rule for forming control signals on the basis of sensor signals received between said first and second moments of time is an intermediate form between said first and second rules. In other words, there does not need to be a single critical time instant that would constitute a sharp border between the application of the first and second rules. Rather,

$$
\begin{aligned}
y_1 &= A_1 x & t \leq t_{c1} \\
y_{int} &= A_{int} x & t_{c1} < t \leq t_{c2} \\
y_2 &= A_2 x & t > t_{c2}
\end{aligned}
\tag{4}
$$

where the intermediate form $A_{int}$ of the rule matrix gradually changes from $A_1$ to $A_2$ as the time t proceeds from $t_{c1}$ to $t_{c2}$. The change may be linear:

$$
A_{int}(t) = \left(1 - \frac{t - t_{c1}}{t_{c2} - t_{c1}}\right) A_1 + \frac{t - t_{c1}}{t_{c2} - t_{c1}} A_2
\tag{5}
$$

or it may be defined stepwise, so that there are e.g. 5 different forms of $A_{int}$, each being a step closer to $A_2$ than its predecessor and each being applied for the duration of the corresponding fifth of the interval $[t_{c1}, t_{c2}]$. Other kinds of changes are easily presented by e.g. changing the linear coefficients of $A_1$ and $A_2$ in equation (5) into logarithmic, exponential, or other non-linear forms. In typical cases the change is nevertheless a monotonous change, so that each change to the intermediate form brings an intermediate value, intermediate sensitivity, intermediate gain, or other quantity defined by the intermediate form $A_{int}$ of the rule matrix closer to the value, sensitivity, or gain defined by the second rule.

The length of the interval $[t_{c1}, t_{c2}]$ should be selected sufficiently long. The purpose of gradually changing from the first rule to the second rule is to ensure that users would not pay attention to the changing way in which the building automation system reacts to sensor signals. A suitable length for the interval $[t_{c1}, t_{c2}]$ depends on the assumed sensitivity and attention span of users. At the time of writing this description it is assumed that if circadian changes in the operation of a building automation system are considered, the length of the interval $[t_{c1}, t_{c2}]$ should be at least in the order of several minutes, and preferably in the order of some hours.

Fig. 2 illustrates an example of gradually changing from applying a first rule to applying a second rule. A lighting system is considered as an example; more exactly it is assumed that at least one of the control outputs of the controller is a lighting control output for transmitting lighting control signals to light sources. The horizontal axis in fig. 2 represents time that has passed since a motion sensor last detected any movement. In a working hours mode the controller is configured to apply a first rule for dimming lights, represented by graph 201. As the graph shows, the lights are kept at 100% for six minutes after receiving the latest sensor signal about detected movement. After that the lights are dimmed down linearly to 15% during the next six minutes, and kept at said 15% for three more minutes before they are completely shut off. In an after hours mode the controller is configured to apply a second rule for dimming lights, represented by graph 202. In said after hours mode the lights are kept at 100% for only two minutes after receiving the latest sensor signal about detected movement. After that the lights are dimmed down linearly to 15% during the next two minutes, and kept at said 15% for one more minute before they are completely shut off. The time values given here are examples only and they do not limit the applicability of the invention: actual time values for different modes of operation may be even widely different from these.

There are four important parameter values in each of the first and second rules described above:

- delay before dimming of lights after last detected movement,
- duration of dimming of lights after last detected movement,
- level to which to dim lights after last detected movement, and
- delay before switching lights off in the absence of further detected movements.

In this exemplary case the level to which the lights are dimmed stays the same (15%), but the value of the three other parameters change: the delay before dimming of light changes from six to three minutes; the duration of dimming changes from six to two minutes, and the delay before switching lights off changes from three minutes to one minute. For the sake of example it is assumed that the interval $[t_{c1}, t_{c2}]$ is 180 minutes (i.e. three hours) long and begins at 3:00 PM. For the sake of example it is also assumed that the changes that define all intermediate forms between said first and second rules are linear with respect to all three changing parameter values. Three intermediate forms are shown in fig. 2 with graphs 203 (valid at 3:45 PM), 204 (valid at 4:30 PM), and 205 (valid at 5:15 PM).

Another parameter value that can be treated similarly is the level to which to brighten the lights in response to a first detected movement. The lighting system may have e.g. a cleaning mode that is taken into use when cleaning personnel come to the premises. One feature of the cleaning mode may be to brighten the lighting so that proper cleaning becomes easier. The change may be made gradually according to an embodiment of the invention.

A computer program that produced lighting control commands in accordance with the procedure described above could work according to the following logic. In order to linearly (or logarithmically, or exponentially, or according to some other chosen strategy) shorten some periods of time, like the delay before dimming of lights after last detected movement, the computer program may continuously update corresponding threshold values stored in dedicated registers. The updating routine should run repeatedly throughout the interval $[t_{c1}, t_{c2}]$ and repeatedly perform a calculation like equation (5) above, with the matrices A replaced with simple scalar forms of said threshold values if that is the only thing to change. Simultaneously another routine should be repeatedly executed to check, whether new movements have been detected and if not, how long time has passed since the last detected movement. When the last-mentioned routine finds that the time passed since the last detected movement becomes equal with the currently valid threshold value for the delay before dimming of lights after last detected movement, an interrupt is generated to trigger the transmission of a lighting control command "dim to X% during time Y", where X and Y are the currently valid threshold values for the corresponding parameters. At the same time the execution of that routine continues that checks, whether new movements have been detected and if not, how long time has passed since the last detected movement. When said routine finds that the time passed since the last detected movement becomes equal to the sum (currently valid threshold value for the delay before dimming of lights after last detected movement) + Y + (currently valid threshold value for the delay before switching lights off in the absence of further detected movements), another interrupt is generated to trigger the transmission of a lighting control command "switch lights off".

In the example above the first and second moments of time are defined in terms of time of the day. They could also be defined in terms of day of the week, day of the month, day of the year, or other type of time value. They could also be defined in terms of two or more types of time value simultaneously, like "3:00 each first Tuesday of June, July, or August". In order to rely on moments of time that are defined in terms of some type of time value, the controller should comprise a real time clock.

Even if they are called moments of time, the first and second moments of time can also be defined otherwise, like in terms of numbers of counted received sensor signals. In order to justify calling them "moments of time" such a definition only needs to be made so that the second moment of time inevitably comes after the first moment of time. For example, the controller may be configured to apply a first rule of forming control signals before it has received 100 sensor signals and to apply a second rule of forming control signals after it has received 200 sensor signals, with the change from the first to the second rule being implemented gradually in steps of the size of one tenth of the difference between the rules after receiving 110, 120, ... etc. sensor signals. In order to rely on moments of time that are defined in terms of the counted number of received sensor signals, the controller should comprise a counter of received sensor signals.

Two types of definitions can also be combined, for example if the controller comprises both a real time clock and a counter of received sensor signals. For example, the controller may be configured to apply a first rule of forming control signals before it has received 100 sensor signals and to apply a second rule of forming control signals after it has received 200 sensor signals on weekdays between 3:00 PM and 4:00 PM, with the change from the first to the second rule being implemented gradually in steps of the size of one tenth of the difference between the rules after receiving 110, 120, ... etc. sensor signals on weekdays between 3:00 PM and 4:00 PM.

A feature common to the embodiments described above is that the first and second rules are predetermined rules. In other words, it is possible to tell beforehand quite exactly, how the system will operate before, during, and after the gradual change from applying the first rule to applying the second rule. This is advantageous, because the system will not drift into any state in which its operation could be unpredictable or unnecessarily surprising to users.

Creative use of definitions of the kind described above may enable building some self-learning capability to the system. Self-learning means that some of the predetermined nature of operation cannot be achieved, but even if the best possible set of parameter values for each conditions that can be encountered could not be known beforehand, the system may initiate such changes in parameter values that gradually drive them towards an optimum. For example, the delay before dimming of lights after last detected movement may have been set quite long initially, which would have been a good choice if the illuminated space would be in busy use. However, it turns out that the space is used much less frequently, so - due to the long delay - the lights stay on often for prolonged periods for no reason. The "first moment of time", at which a gradual change is initiated, may come for example when the controller has noticed that during an averaging period the number of detected movements per hour was lower than a predetermined limit. In response the controller may begin gradually decreasing the value of the delay before dimming of lights after last detected movement, until at some later moment (the "second moment of time") the controller has noticed that at least twice there was a detected movement immediately after dimming began, meaning that someone was in there still, although not moving enough to trigger the sensor, when the lights began dimming down.

Some examples of use cases for the invention are considered in the following.

According to a first example the building automation system is responsible for the lighting and HVAC of a hospital. A room in the hospital, such as a modern single room for example, may be equipped with a variety of sensors, such as sound sensors, imaging sensors, movement sensors, light sensors, temperature sensors and the like. Here only the sensors belonging to the building automation system are considered; there are often additional sensors and devices that belong to the clinical equipment of the room. The room may further be equipped with controllable devices such as luminaires, window blinds, heating and ventilation valves, electric heaters, and others. A controller of the building automation system may be located within the room or elsewhere within the hospital. If appropriate communication connections exist, the controller may be located also elsewhere, even very far away from the sensors and devices to be controlled. According to an embodiment of the present invention the controller is configured not only to form the control signals to the devices to be controlled on the basis of the sensor signals but also to gradually change from applying a first rule of forming control signals to applying a second rule of forming control signals between certain first and second moments of time.

One of the quantities that the controller is configured to control is the temperature of the room. Basically the night-time room temperature should be about two degrees lower than daytime in order to support a natural and healthy sleeping pattern of the occupant. Regularly lowering the temperature for the night can be achieved with simple time-based control. However, such simple time-based control can be augmented with sensor-based control, for example so that if movement sensors show no movement in the room for a longer period daytime, the room is considered empty or the patient is assumed to be sleeping, so that the temperature can be lowered already even if it is not night yet. Or if considerable movement and voices are detected during the night it can be assumed that the condition of the patient necessitates the continued presence of night-time personnel, so the temperature of the room is raised to the daytime level in order to enhance the working comfort of the personnel. Changes between night-time and daytime modes of sensor-enhanced temperature control can be made smoothly according to an embodiment of the invention.

Also the lighting of the room can be controlled intelligently in accordance with embodiments of the invention. Movements detected daytime may trigger switching on and maintaining full daytime lighting, while movements detected at night may trigger switching on only some soft, ambient lighting that leads the way to the toilet and that is kept on only for a short time, for example. The sensitivity of the system to detected movement may be changed so that if more movement is detected at night, or if detected night-time movement takes place simultaneously with detected voices, more light is switched on. Similar to office spaces, the off-hours lighting of a hospital room may employ shorter delays before dimming of lights after last detected movement, and shorter duration of dimming of lights after last detected movement than daytime, because both the patient and the personnel can be expected to only need light for shorter durations of time when they are not as busy as during the day. All changes in such delays and durations of time may be accomplished smoothly over some period of time as explained above with reference to fig. 2.

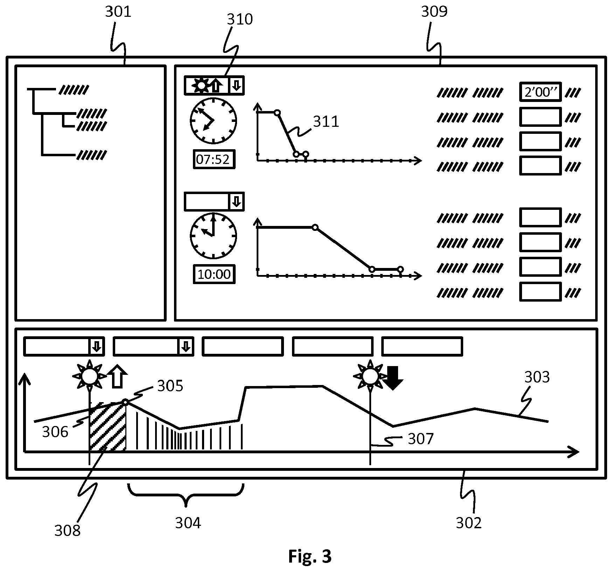

Fig. 3 illustrates an example of a graphical user interface that the operator's computer 109 (see fig. 1) can set up for offering the operator visual feedback about how the system is currently configured to operate and for allowing the operator to easily modify the rules that define, how control signals are formed on the basis of sensor signals. The graphical user interface may comprise a number of windows, of which three examples are shown in fig. 3. A directory listing window 301 illustrates an organization of features that can be used in or associated with the operation of the system; for example, the directory listing window 301 can be used to show a library of default profiles or previously stored responses to sensor signals for the operator to choose from, and/or a hierarchical organization of the devices in the building automation system so that the operator can choose, which devices should apply which rules.

A time axis window 302 at the bottom of the screen may be used to illustrate some aspect of operation of the building automation system that lasts for the whole day or for some other longer period of time. As an example, the graph 303 in fig. 3 illustrates how the general colour temperature of lighting will change during a cycle of 24 hours. As explained in the co-pending European patent application EP15169832.1, the colour temperature of lighting can be illustrated both as the height of the graph 303 from the horizontal axis and as a colour blend like at the location marked as 304. The operator may make changes to this generally illustrated aspect of operation by clicking on points of the graph (see point 305) and dragging them up, down, left, or right. The time axis window 302 may contain symbols of recurrently occurring events, such as sunrise 306 and sunset 307, and points of the graph 303 may be defined with reference to such recurrently occurring events, for example so that an event represented by a certain point of the graph will always precede or follow sunrise within a predetermined time.

The time axis window 302 can also be used to illustrate transition times, during which the processor of a controlling device is configured to gradually change from applying a first rule to applying a second rule when forming control signals on the basis of sensor signals. In fig. 3 such a transition time is shown as a hatched area 308, and it has been defined so that the transition time begins at sunrise and ends at point 305 (the location of which on the time axis may be fixed or bound to the sunrise moment with a given marginal). When the user clicks a mouse on the illustrated transition time or gives some other indication of selecting that transition time, there opens a third window called the transition details window 309. The upper part of the transition details window 309 illustrates the first rule, i.e. the way in which control signals will be formed on the basis of sensor signals at the beginning of the transition time, and the lower part of the transition details window 309 illustrates the second rule, i.e. the way in which control signals will be formed on the basis of sensor signals at the end of the transition time.

In fig. 3 the example of first and second rules is again associated with the delays and levels of lighting that will be applied after the last detected movement. In the upper part of the transition details window 309 the operator is presented with, and offered the possibility to change, information about the so-called first moment of time. This is the time at which the change from applying the first rule to applying the second rule begins. In fig. 3 the first moment of time has been associated with the time of sunrise by selecting a corresponding alternative from a pull-down menu 310. The user interface program links this selection with the adjacent clock face and time value fields, where it automatically displays the currently valid sunrise time that is read from a previously stored table in memory. The adjacent graph 311 shows the delay before dimming, duration of dimming, level before switch-off, and delay before switch-off in graphical form. The user can change the parameter values by clicking and dragging points of the graph 311 and/or by entering corresponding values into the fields on the right. The user interface program links the form of the graph 311 and the contents of the fields so that any change in one of these is automatically reflected in the other. Similar considerations apply to the lower part of the transition details window 309, wherein the operator is presented with, and offered the possibility to change, information about the so-called second moment of time. This is the time at which the change from applying the first rule to applying the second rule ends.

Fields of the time axis window 302 and the transition details window 309 are linked so that changes made in one field are automatically reflected in the other fields. For example if the operator changes the length of the transition period by dragging one of its limits in the time axis window 302, the new limits of the transition period are automatically updated in the corresponding fields of the transition details window 309. Correspondingly if the operator changes the length of the transition period by entering a new value in one of the fields in the transition details window 309, the length of the hatched block on the time axis 302 of the time axis window 302 is changed accordingly.

The computer program that sets up and operates the user interface of fig. 3 may run either in the operator's computer 109 or in the controller 101 of fig. 1.

**Claims**

1. A controller (101) of a building automation system, comprising:

   - at least one sensor signal input (102) for receiving sensor signals,
   - at least one control signal output (103) for transmitting control signals to devices (105) of the building automation system, said control signals involving values, and
   - a processor (106) coupled to receive sensor signals from said sensor signal input (102) and to transmit control signals to said control signal output (103),

   wherein said processor (106) is configured to form said values of said control signals on the basis of said sensor signals, and wherein said processor (106) is configured to apply a first rule (201) of forming values of control signals on the basis of sensor signals at a first moment of time and to apply a second, different rule (202) of forming values of control signals on the basis of sensor signals at a second, later moment of time, wherein each rule (201, 202) defines, what values of control signals will be formed on the basis of particular ones of said sensor signals, **characterized in that** said processor (106) is configured to gradually change, during an interval between said first and second moments of time that is at least several minutes long, from applying said first rule (201) to applying said second rule (202), so that a valid rule for forming values of control signals on the basis of sensor signals received between said first and second moments of time is an intermediate form (203, 204, 205) between said first (201) and second (202) rules.

2. A controller (101) according to claim 1, wherein:

   - the controller (101) comprises a real time clock, and
   - said first and second moments of time are defined in terms of at least one of: time of the day, day of the week, day of the month, day of the year.

3. A controller (101) according to any of claims 1 or 2, wherein:

   - the controller (101) comprises a counter of received sensor signals, and
   - said first and second moments of time are defined in terms of numbers of counted received sensor signals, in addition to or in place of being defined in terms of at least one of: time of the day, day of the week, day of the month, day of the year.

4. A controller (101) according to any of the preceding claims, wherein:

   - at least one of said control outputs is a lighting control output for transmitting lighting control signals to light sources,
   - said first (201) and second (202) rules each define a value of at least one of the following parameters: delay before dimming of lights after last detected movement, duration of dimming of lights after last detected movement, level to which to dim lights after last detected movement, delay before switching lights off in the absence of further detected movements, level to which to brighten the lights in response to a first detected movement; and the values defined by the first and second rules are different, and
   - said intermediate form (203, 204, 205) is a rule that defines an intermediate value of such of said parameters for which the first (201) and second (202) rules define a value.

5. A controller (101) according to any of the preceding claims, wherein:

   - said first and second rules each define a sensitivity or gain to be used in forming control signals on the basis of sensor signals, and the sensitivity or gain defined by the first rule is different from the one defined by the second rule, and
   - said intermediate form is a rule that defines an intermediate sensitivity or gain that is between those defined by the first and second rules.

6. A controller (101) according to claim 4 or 5, wherein when said controller is a controller according to claim 4, the processor (106) is configured to repeatedly change said intermediate form (203, 204, 205) between said first and second moments of time, so that each change to said intermediate form (203, 204, 205) brings said intermediate value closer to the value defined by the second rule (202), and wherein when said controller is a controller according to claim 5 but not further according to claim 4, said processor (106) is configured to repeatedly change said intermediate form between said first and second moments of time, so that each change to said intermediate form brings said intermediate sensitivity or gain closer to the sensitivity or gain defined by the second rule.

7. A method for making a building automation system react to sensor signals, comprising:

   - receiving sensor signals,
   - forming control signals on the basis of received sensor signals, said control signals involving values, and
   - transmitting the formed control signals to controlled devices of said building automation system,

   wherein a first rule (201) is applied to form said values of said control signals on the basis of sensor signals at a first moment of time and a second, different rule (202) is applied to form said values of control signals on the basis of sensor signals at a second, later moment of time, wherein each rule (201, 202) defines, what values of control signals will be formed on the basis of particular ones of said sensor signals,
   **characterized in that** the method comprises gradually changing, during an interval between said first and second moments of time that is at least several minutes long, from applying said first rule (201) to applying said second rule (202), so that a valid rule for forming values of control signals on the basis of sensor signals received between said first and second moments of time is an intermediate form (203, 204, 205) between said first (201) and second (202) rules.

8. A method according to claim 7, wherein the first and second moments of time are defined in terms of at least one of: time of the day, day of the week, day of the month, day of the year.

9. A method according to any of claims 7 or 8, wherein the definition of at least one of the first and second moments of time is at least partially made in terms of numbers of counted received sensor signals, in addition to or in place of being defined in terms of at least one of: time of the day, day of the week, day of the month, day of the year.

10. A method according to any of claims 7 to 9, wherein

    - at least some of said control signals are used to control lighting, and
    - said first (201) and second (202) rules each define a value of at least one of the following parameters: delay before dimming of lights after last detected movement, duration of dimming of lights after last detected movement,

level to which to dim lights after last detected movement, delay before switching lights off in the absence of further detected movements, level to which to brighten the lights in response to a first detected movement; and the values defined by the first and second rules are different, and
- said intermediate form (203, 204, 205) is a rule that defines an intermediate value of such of said parameters for which the first (201) and second (202) rules define a value.

11. A method according to any of claims 7 to 10, wherein

- said first and second rules each define a sensitivity or gain to be used in forming control signals on the basis of sensor signals, and the sensitivity or gain defined by the first rule is different from the one defined by the second rule, and
- said intermediate form is a rule that defines an intermediate sensitivity or gain that is between those defined by the first and second rules.

12. A method according to any of claims 7 to 11, wherein when the method is a method according to claim 10, the change from applying said first rule (201) to applying said second rule (202) is a monotonous change, so that each change to said intermediate form (203, 204, 205) brings said intermediate value closer to the value defined by the second rule (202), and wherein when the method is a method according to claim 11 but not further according to claim 10, the change from applying said first rule to applying said second rule is a monotonous change, so that each change to said intermediate form brings said intermediate sensitivity or gain closer to the sensitivity or gain defined by the second rule.

13. A computer program comprising one or more set of one or more machine-readable instructions that, when executed by one or more processors, are configured to cause the execution of any of the methods according to claims 7 to 12.

## Patentansprüche

1. Steuereinheit (101) eines Gebäudeautomatisierungssystems, die Folgendes umfasst:

- wenigstens einen Sensorsignaleingang (102) zum Empfangen von Sensorsignalen,
- wenigstens einen Steuersignalausgang (103) zum Senden von Steuersignalen zu Vorrichtungen (105) des Gebäudeautomatisierungssystems, wobei die Steuersignale Werte enthalten, und
- einen Prozessor (106), der gekoppelt ist, um Sensorsignale von dem Sensorsignaleingang (102) zu empfangen und um Steuersignale zu dem Steuersignalausgang (103) zu senden,

wobei der Prozessor (106) konfiguriert ist, die Werte der Steuersignale auf Grundlage der Sensorsignale zu bilden, und wobei der Prozessor (106) konfiguriert ist, eine erste Regel (201) des Bildens von Werten von Steuersignalen anhand von Sensorsignalen zu einem ersten Zeitpunkt anzuwenden und eine zweite, andere Regel (202) des Bildens von Werten von Steuersignalen auf Grundlage von Sensorsignalen zu einem weiteren, späteren Zeitpunkt anzuwenden, wobei jede Regel (201, 202) definiert, welche Werte von Steuersignalen auf Grundlage Bestimmter der Sensorsignale gebildet werden, **dadurch gekennzeichnet, dass** der Prozessor (106) konfiguriert ist, während eines Intervalls zwischen dem ersten und dem zweiten Zeitpunkt, das wenigstens mehrere Minuten lang ist, das Anwenden der ersten Regel (201) graduell zum Anwenden der zweiten Regel (202) zu ändern, so dass eine gültige Regel des Bildens von Werten von Steuersignalen auf Grundlage von Sensorsignalen, die zwischen dem ersten und den zweiten Zeitpunkt empfangen werden, eine Zwischenform (203, 204, 205) zwischen der ersten (201) und der zweiten (202) Regel ist.

2. Steuereinheit (101) nach Anspruch 1, wobei:

- die Steuereinheit (101) einen Echtzeittakt enthält und
- der erste und der zweite Zeitpunkt wenigstens anhand des Folgenden definiert sind: Zeit des Tages und/oder Tag der Woche und/oder Tag des Monats und/oder Tag des Jahres.

3. Steuereinheit (101) nach einem der Ansprüche 1 oder 2, wobei:

- die Steuereinheit (101) einen Zähler für empfangene Sensorsignale enthält und
- der erste und der zweite Zeitpunkt definiert werden anhand der Anzahl der gezählten empfangenen Sensorsignale zusätzlich zu oder anstelle der Definition anhand des Folgenden: Zeit des Tages und/oder Tag der Woche und/oder Tag des Monats und/oder Tag des Jahres.

4. Steuereinheit (101) nach einem der vorhergehenden Ansprüche, wobei:

- wenigstens einer der Steuerausgänge ein Beleuchtungssteuerausgang zum Senden von Beleuchtungssteuersignalen zu Lichtquellen ist,
- die erste (201) und die zweite (202) Regel jeweils einen Wert wenigstens eines der folgenden Parameter definieren: Verzögerung vor dem Dimmen von Leuchten nach einer letzten detektierten Bewegung, Dauer des Dimmens von Leuchten nach einer letzten detektierten Bewegung, Pegel, auf den Leuchten nach einer letzten detektierten Bewegung gedimmt werden sollen, Verzögerung vor dem Ausschalten von Leuchten bei Abwesenheit weiterer detektierter Bewegungen, Pegel, auf den Leuchten in Reaktion auf eine erste detektierte Bewegung erleuchtet werden sollen; wobei die Werte, die durch die erste und die zweite Regel definiert werden, verschieden sind, und
- die Zwischenform (203, 204, 205) eine Regel ist, die einen Zwischenwert derjenigen der Parameter ist, für die die erste (201) und die zweite (202) Regel einen Wert definieren.

5. Steuereinheit (101) nach einem der vorhergehenden Ansprüche, wobei:

- die erste und die zweite Regel jeweils eine Empfindlichkeit oder eine Verstärkung definieren, die beim Formen von Steuersignalen anhand von Sensorsignalen verwendet werden soll, und die Empfindlichkeit oder die Verstärkung, die durch die erste Regel definiert ist, von jener, die durch die zweite Regel definiert ist, verschieden ist, und
- die Zwischenform eine Regel ist, die eine Zwischenempfindlichkeit oder eine Zwischenverstärkung definiert, die zwischen jenen liegt, die durch die erste und die zweite Regel definiert sind.

6. Steuereinheit (101) nach Anspruch 4 oder 5, wobei dann, wenn die Steuereinheit eine Steuereinheit nach Anspruch 4 ist, der Prozessor (106) konfiguriert ist, die Zwischenform (203, 204, 205) zwischen dem ersten und dem zweiten Zeitpunkt wiederholt zu ändern, so dass jede Änderung zu der Zwischenform (203, 204, 205) einen Zwischenwert erbringt, der näher bei dem durch die zweite Regel (202) definierten Wert legt, und wobei dann, wenn die Steuereinheit eine Steuereinheit nach Anspruch 5, jedoch nicht mehr nach Anspruch 4, ist, der Prozessor (106) konfiguriert ist, die Zwischenform zwischen dem ersten und dem zweiten Zeitpunkt wiederholt zu ändern, so dass jede Änderung der Zwischenform eine Zwischenempfindlichkeit oder eine Zwischenverstärkung erbringt, die näher bei der durch die zweite Regel definierten Empfindlichkeit oder Verstärkung liegt.

7. Verfahren, um ein Gebäudeautomatisierungssystem zu veranlassen, auf Sensorsignale zu reagieren, das Folgendes umfasst:

- Empfangen von Sensorsignalen,
- Bilden von Steuersignalen anhand empfangener Sensorsignale, wobei die Steuersignale Werte enthalten, und
- Senden der gebildeten Steuersignale zu gesteuerten Vorrichtungen des Gebäudeautomatisierungssystems,

wobei eine erste Regel (201) angewendet wird, um die Werte der Steuersignale anhand von Sensorsignalen zu einem ersten Zeitpunkt zu bilden, und eine zweite, andere Regel (202) angewendet wird, um die Werte von Steuersignalen anhand von Sensorsignalen zu einem zweiten, späteren Zeitpunkt zu bilden, wobei jede Regel (201, 202) definiert, welche Werte von Steuersignalen anhand Bestimmter der Sensorsignale gebildet werden, **dadurch gekennzeichnet, dass** das Verfahren das graduelle Ändern des Anwendens der ersten Regel (201) zum Anwenden der zweiten Regel (202) während eines Intervalls zwischen dem ersten und dem zweiten Zeitpunkt umfasst, so dass eine gültige Regel des Bildens von Werten von Steuersignalen anhand von Sensorsignalen, die zwischen dem ersten und dem zweiten Zeitpunkt empfangen werden, eine Zwischenform (203, 204, 205) zwischen der ersten (201) und der zweiten (202) Regel ist.

8. Verfahren nach Anspruch 7, wobei der erste und der zweite Zeitpunkt anhand des Folgenden definiert sind: Zeit des Tages und/oder Tag der Woche und/oder Tag des Monats und/oder Tag des Jahres.

9. Verfahren nach einem der Ansprüche 7 oder 8, wobei die Definition des ersten und/oder des zweiten Zeitpunkts wenigstens teilweise anhand gezählten Anzahl der empfangenen Sensorsignale zusätzlich zu oder anstelle der Definition anhand des Folgenden erfolgt: Zeit des Tages und/oder Tag der Woche und/oder Tag des Monats und/oder Tag des Jahres.

10. Verfahren nach einem der Ansprüche 7 bis 9, wobei

- wenigstens einige der Steuersignale für die Steuerung einer Beleuchtung verwendet werden und
- die erste (201) und die zweite (202) Regel jeweils einen Wert wenigstens eines der folgenden Parameter definieren: Verzögerung vor einem Dimmen von Leuchten nach einer letzten detektierten Bewegung, Dauer des Dimmens von Leuchten nach einer letzten detektierten Bewegung, Pegel, auf den Leuchten nach einer letzten detektieren Bewegung gedimmt werden sollen, Verzögerung vor dem Ausschalten von Leuchten bei Abwesenheit weiterer detektierter Bewegungen, Pegel, auf denen die Leuchten in Reaktion auf eine erste detektierte Bewegung erleuchtet werden sollen; wobei die Werte, die durch die erste und die zweite Regel definiert sind, verschieden sind, und
- die Zwischenform (203, 204, 205) eine Regel ist, die einen Zwischenwert derjenigen der Parameter definiert, für die die erste (201) und die zweite (202) Regel einen Wert definieren.

11. Verfahren nach einem der Ansprüche 7 bis 10, wobei:

- die erste und die zweite Regel jeweils eine Empfindlichkeit oder eine Verstärkung definieren, die beim Bilden von Steuersignalen anhand von Sensorsignalen verwendet werden sollen, und die Empfindlichkeit oder die Verstärkung, die durch die erste Regel definiert ist, von derjenigen, die durch die zweite Regel definiert ist, verschieden ist, und
- die Zwischenform eine Regel ist, die eine Zwischenempfindlichkeit oder eine Zwischenverstärkung definiert, die zwischen jenen, die durch die erste und die zweite Regel definiert sind, liegt.

12. Verfahren nach einem der Ansprüche 7 bis 11, wobei dann, wenn das Verfahren ein Verfahren nach Anspruch 10 ist, die Änderung vom Anwenden der ersten Regel (201) zum Anwenden der zweiten Regel (202) eine monotone Änderung ist, so dass jede Änderung der Zwischenform (203, 204, 205) einen Zwischenwert erbringt, der näher bei dem Wert liegt, der durch die zweite Regel (202) definiert ist, und wobei dann, wenn das Verfahren ein Verfahren nach Anspruch 11, jedoch nicht mehr nach Anspruch 10 ist, die Änderung vom Anwenden der ersten Regel zum Anwenden der zweiten Regel eine monotone Änderung ist, so dass jede Änderung der Zwischenform eine Zwischenempfindlichkeit oder eine Zwischenverstärkung erbringt, die näher bei der Empfindlichkeit oder der Verstärkung liegt, die durch die zweite Regel definiert ist.

13. Computerprogramm, das einen oder mehrere Sätze einer oder mehrerer maschinenlesbarer Anweisungen enthält, die dann, wenn sie durch einen oder mehrere Prozessoren ausgeführt werden, konfiguriert sind, die Ausführung eines der Verfahren nach den Ansprüchen 7 bis 12 zu bewirken.

**Revendications**

1. Unité de commande (101) d'un système immotique, comprenant :

- au moins une entrée de signal de capteur (102) pour recevoir des signaux de capteur,
- au moins une sortie de signal de commande (103) pour transmettre des signaux de commande à des dispositifs (105) du système immotique, lesdits signaux de commande impliquant des valeurs, et
- un processeur (106) couplé pour recevoir des signaux de capteur de ladite entrée de signal de capteur (102) et pour transmettre des signaux de commande à ladite sortie de signal de commande (103),

dans laquelle ledit processeur (106) est configuré pour former lesdites valeurs desdits signaux de commande sur la base desdits signaux de capteur, et dans laquelle ledit processeur (106) est configuré pour appliquer une première règle (201) de formation de valeurs de signaux de commande sur la base de signaux de capteur à un premier moment et pour appliquer une deuxième règle différente (202) de formation de valeurs de signaux de commande sur la base de signaux de capteur à un deuxième moment ultérieur, où chaque règle (201, 202) définit les valeurs de signaux de commande qui seront formées sur la base de signaux particuliers desdits signaux de capteur, **caractérisée en ce que** ledit processeur (106) est configuré pour changer progressivement, pendant un intervalle entre lesdits premier et deuxième moments qui dure au moins plusieurs minutes, de l'application de ladite première règle (201) à l'application de ladite deuxième règle (202), de sorte qu'une règle valide pour former des valeurs de signaux de commande sur la base de signaux de capteur reçus entre lesdits premier et deuxième moments soit une forme intermédiaire (203, 204, 205) entre lesdites première (201) et deuxième (202) règles.

2.  Unité de commande (101) selon la revendication 1, dans laquelle :

    - l'unité de commande (101) comprend une horloge temps réel, et
    - lesdits premier et deuxième moments sont définis en termes d'au moins l'un(e) : de l'heure de la journée, du jour de la semaine, du jour du mois, du jour de l'année.

3.  Unité de commande (101) selon l'une des revendications 1 et 2, dans laquelle :

    - l'unité de commande (101) comprend un compteur de signaux de capteur reçus, et
    - lesdits premier et deuxième moments sont définis en termes de nombres de signaux de capteur reçus comptés, en plus ou à la place d'être définis en termes d'au moins l'un(e) : de l'heure de la journée, du jour de la semaine, du jour du mois, du jour de l'année.

4.  Unité de commande (101) selon l'une des revendications précédentes, dans laquelle :

    - au moins l'une desdites sorties de commande est une sortie de commande d'éclairage pour transmettre des signaux de commande d'éclairage à des sources de lumière,
    - lesdites première (201) et deuxième (202) règles définissent chacune une valeur d'au moins l'un des paramètres suivants : un délai avant l'atténuation des lumières après le dernier mouvement détecté, une durée de l'atténuation des lumières après le dernier mouvement détecté, un niveau auquel les lumières sont atténuées après le dernier mouvement détecté, un délai avant d'éteindre les lumières en l'absence de mouvements détectés supplémentaires, un niveau auquel les lumières sont éclairées en réponse à un premier mouvement détecté ; et les valeurs définies par les première et deuxième règles sont différentes, et
    - ladite forme intermédiaire (203, 204, 205) est une règle qui définit une valeur intermédiaire de ceux desdits paramètres pour lesquels les première (201) et deuxième (202) règles définissent une valeur.

5.  Unité de commande (101) selon l'une des revendications précédentes, dans laquelle :

    - lesdites première et deuxième règles définissent chacune une sensibilité ou un gain à utiliser dans la formation de signaux de commande sur la base de signaux de capteur, et la sensibilité ou le gain défini(e) par la première règle est différent(e) de celui/celle défini(e) par la deuxième règle, et
    - ladite forme intermédiaire est une règle qui définit une sensibilité ou un gain intermédiaire qui est entre ceux définis par les première et deuxième règles.

6.  Unité de commande (101) selon la revendication 4 ou 5, dans laquelle, lorsque ladite unité de commande est une unité de commande selon la revendication 4, le processeur (106) est configuré pour changer de manière répétée ladite forme intermédiaire (203, 204, 205) entre lesdits premier et deuxième moments, de sorte que chaque changement à ladite forme intermédiaire (203, 204, 205) rapproche ladite valeur intermédiaire de la valeur définie par la deuxième règle (202), et dans laquelle, lorsque ladite unité de commande est une unité de commande selon la revendication 5 mais pas, en outre, selon la revendication 4, ledit processeur (106) est configuré pour changer de manière répétée ladite forme intermédiaire entre lesdits premier et deuxième moments, de sorte que chaque changement à ladite forme intermédiaire rapproche ladite sensibilité ou ledit gain intermédiaire de la sensibilité ou du gain défini(e) par la deuxième règle.

7.  Procédé pour faire réagir un système immotique aux signaux de capteur, comprenant le fait :

    - de recevoir des signaux de capteur,
    - de former des signaux de commande sur la base des signaux de capteur reçus, lesdits signaux de commande impliquant des valeurs, et
    - de transmettre les signaux de commande formés à des dispositifs commandés dudit système immotique,

    dans lequel une première règle (201) est appliquée pour former lesdites valeurs desdits signaux de commande sur la base de signaux de capteur à un premier moment et une deuxième règle différente (202) est appliquée pour former lesdites valeurs des signaux de commande sur la base de signaux de capteur à un deuxième moment ultérieur, où chaque règle (201, 202) définit les valeurs de signaux de commande qui seront formées sur la base de signaux particuliers desdits signaux de capteur,

**caractérisé en ce que** le procédé comprend le fait de changer progressivement, pendant un intervalle entre lesdits premier et deuxième moments qui dure au moins plusieurs minutes, de l'application de ladite première règle (201) à l'application de ladite deuxième règle (202), de sorte qu'une règle valide pour former des valeurs de signaux de commande sur la base de signaux de capteur reçus entre lesdits premier et deuxième moments soit une forme intermédiaire (203, 204, 205) entre lesdites première (201) et deuxième (202) règles.

8. Procédé selon la revendication 7, dans lequel les premier et deuxième moments sont définis en termes d'au moins l'un(e) : de l'heure de la journée, du jour de la semaine, du jour du mois, du jour de l'année.

9. Procédé selon l'une des revendications 7 et 8, dans lequel la définition d'au moins l'un des premier et deuxième moments est effectuée au moins partiellement en termes de nombres de signaux de capteur reçus comptés, en plus ou à la place d'être définis en termes d'au moins l'un(e) : de l'heure de la journée, du jour de la semaine, du jour du mois, du jour de l'année.

10. Procédé selon l'une des revendications 7 à 9, dans lequel

- au moins certains desdits signaux de commande sont utilisés pour commander l'éclairage, et
- lesdites première (201) et deuxième (202) règles définissent chacune une valeur d'au moins l'un des paramètres suivants : un délai avant l'atténuation des lumières après le dernier mouvement détecté, une durée de l'atténuation des lumières après le dernier mouvement détecté, un niveau auquel les lumières sont atténuées après le dernier mouvement détecté, un délai avant d'éteindre les lumières en l'absence de mouvements détectés supplémentaires, un niveau auquel les lumières sont éclairées en réponse à un premier mouvement détecté ; et les valeurs définies par les première et deuxième règles sont différentes, et
- ladite forme intermédiaire (203, 204, 205) est une règle qui définit une valeur intermédiaire de ceux desdits paramètres pour lesquels les première (201) et deuxième (202) règles définissent une valeur.

11. Procédé selon l'une des revendications 7 à 10, dans lequel

- lesdites première et deuxième règles définissent chacune une sensibilité ou un gain à utiliser dans la formation de signaux de commande sur la base de signaux de capteur, et la sensibilité ou le gain défini(e) par la première règle est différent(e) de celui/celle défini(e) par la deuxième règle, et
- ladite forme intermédiaire est une règle qui définit une sensibilité ou un gain intermédiaire qui est entre ceux définis par les première et deuxième règles.

12. Procédé selon l'une des revendications 7 à 11, dans lequel, lorsque le procédé est un procédé selon la revendication 10, le changement de l'application de ladite première règle (201) à l'application de ladite deuxième règle (202) est un changement monotone, de sorte que chaque changement à ladite forme intermédiaire (203, 204, 205) rapproche ladite valeur intermédiaire de la valeur définie par la deuxième règle (202), et dans lequel, lorsque le procédé est un procédé selon la revendication 11 mais pas, en outre, selon la revendication 10, le changement de l'application de ladite première règle à l'application de ladite deuxième règle est un changement monotone, de sorte que chaque changement à ladite forme intermédiaire rapproche ladite sensibilité ou ledit gain intermédiaire de la sensibilité ou du gain défini(e) par la deuxième règle.

13. Programme informatique comprenant un ou plusieurs ensemble(s) d'une ou de plusieurs instruction(s) lisible(s) par machine qui, lorsqu'elle(s) est/sont exécutée(s) par un ou plusieurs processeur(s), est/sont configurée(s) pour provoquer l'exécution de l'un des procédés selon les revendications 7 à 12.

Fig. 1

Fig. 2

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170122616 A1

- EP 15169832